# EUROPÄISCHE PATENTSCHRIFT

(11) **EP 2 547 719 B1**
(45) Veröffentlichungstag und Bekanntmachung des Hinweises auf die Patenterteilung: **30.04.2014**
(21) Anmeldenummer: 11702461.2
(22) Anmeldetag: 09.02.2011
(51) Int. Cl.: C08J 5/00, C08J 5/18, B29C 47/80, B29C 47/86, B29C 47/00, B29C 47/88, B29L 7/00

(54) **CHEMIKALIENBESTÄNDIGE FOLIEN IN HOHER OPTISCHER QUALITÄT**
CHEMICAL-RESISTANT FILMS OF HIGH OPTICAL QUALITY
PELLICULES DE GRANDE QUALITÉ OPTIQUE RÉSISTANT AUX PRODUITS CHIMIQUES

(30) Priorität: 02.08.2010 DE 102010038756; 17.03.2010 DE 102010002978
(43) Veröffentlichungstag der Anmeldung: 23.01.2013
(73) Patentinhaber: Evonik Röhm GmbH, 64293 Darmstadt (DE)
(72) Erfinder: NEUHÄUSER, Achim, 55128 Mainz (DE); DICKHAUT, Günther, 68305 Mannheim (DE); RICHTER, Ralf, 63457 Hanau/Großauheim (DE); SCHERBLE, Jonas, 64380 Roßdorf (DE); KARAMPOUGIOUKIS, Wangelis, 64289 Darmstadt (DE)
(86) Internationale Anmeldenummer: PCT/EP2011/051848
(87) Internationale Veröffentlichungsnummer: WO 2011/113644

(56) Entgegenhaltungen:
- EP-A1- 1 596 113
- EP-A1- 1 804 094
- DE-A1- 10 136 286

## Beschreibung

Die vorliegende Erfindung betrifft ein Verfahren zur Herstellung von transparenten Kunststofffolien bzw. Kunststoffformkörpern mit besonders hoher Chemikalienbeständigkeit, insbesondere einer sehr guten Beständigkeit gegenüber Öl-Wasser- bzw. Wasser-Öl-Emulsionen und hoher optischer Qualität.

### Stand der Technik

Für Anwendungen mit einem besonders hohen Anspruch an das optische Erscheinungsbild werden hohe Ansprüche an die Witterungs- und vor allem an die Chemikalienbeständigkeit gestellt. Als Beispiel seien Kunststoffteile im Fahrzeuginnenraum aufgeführt. Diese können in regelmäßigen Kontakt vor allem mit Ölen oder Öl-Wasser- bzw. Wasser-Öl-Emulsionen aus Kosmetika oder Lebensmitteln kommen. Ein besonderes Problem stellen dabei beispielsweise Sonnencreme, Sonnenöl oder Lotionen dar. Besonders Sonnencremes und -öle enthalten neben anorganischen UV-Absorbern auch erhebliche Mengen organische UV-Absorber, die bei vielen Kunststoffen Spannnungsrisse auslösen. Die meisten im Fahrzeuginnenraum gebräuchlichen Kunststoffe zeigen keine ausreichende Langzeitstabilität gegenüber Sonnencreme und verlieren bei längerem Gebrauch optische Qualität.

Es ist bekannt, dass insbesondere Formmassen wie die Polyamide PA PACM12 oder PA MACM12 eine sehr gute Beständigkeit gegen Chemikalien, Öle, Fette oder Lipide zeigen. Folien aus diesen Materialien sind beispielsweise aus der EP 1 804 094, JP 2006-227591 und der US 2009/0085019 bekannt. Aus diesen Anmeldungen gehen jedoch keine Erkenntnisse über das Qualitätsniveau der Folien oder eine Lehre zur Gewährleistung einer hohen optischen Qualität hervor. Vielmehr ist die Verarbeitung solcher Formmassen mit hoher Qualitätskonstanz über eine größere Produktionszeit zu Folien oder Formkörpern mit hoher optischer Qualität bis dato nicht beschrieben.

Extrusionsversuche auf einer Flachfolienanlage mit einem Breitschlitzwerkzeug im sogenannten Chill-Roll-Verfahren zeigen mit den bekannten Methoden sehr schnell eine stetige Verschlechterung der Materialqualität. So ist schnell eine Zunahme an Streifen oder Stippen in den Folien bzw. Formkörpern zu beobachten. Daraus resultieren regelmäßige Reinigungspausen und Unterbrechungen des Herstellprozesses. Somit gelten diese Polyamide bis dato als nicht mittels Extrusion, sondern nur durch Spritzguss verarbeitbar. Dadurch ist die Herstellung von Folien gar nicht und von Platten nur eingeschränkt möglich.

Polyamid PACM12 wird aus Diaminodicyclohexylmethan und Dodecandisäure hergestellt. Polyamid MACM12 wird aus 3,3-Dimethyl-p-diaminocyclohexylmethan und Dodecandisäure hergestellt.

### Aufgabe

In Anbetracht des Standes der Technik war es nun Aufgabe der vorliegenden Erfindung, ein Verfahren zur Herstellung von chemikalienbeständigen, transparenten Kunststoffoberflächen zur Verfügung zu stellen.

Darüber hinaus war es Aufgabe, ein Verfahren zur Verfügung zu stellen, mit dem Kunststofffolien bzw. Kunststoffformkörper mit einer hohen optischen Qualität insbesondere in Bezug auf Schlieren, Streifen, Gelkörper und andere Verunreinigungen herstellbar sind.

Insbesondere war es die Aufgabe, ein Verfahren zur Herstellung transparenter Kunststofffolien bzw. Kunststoffformkörper mit besonders hoher Beständigkeit gegenüber Chemikalien und insbesondere Wasser-Öl- bzw. Öl-Wasser-Emulsionen wie Kosmetika, beispielsweise Sonnencreme zu Verfügung zu stellen.

Weitere nicht explizit genannte Aufgaben ergeben sich aus dem Gesamtzusammenhang der nachfolgenden Beschreibung, Ansprüche und Beispiele.

### Lösung

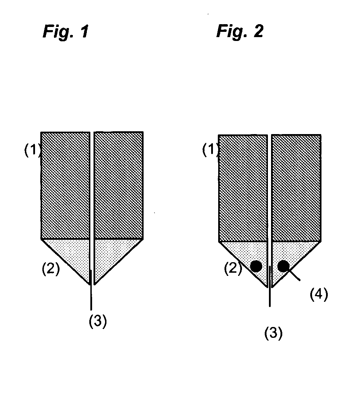

Die in Klammern stehenden Ziffern beziehen sich im Folgenden auf die Zeichnungen Fig. 1 bis Fig. 3.

Gelöst wurden die Aufgaben durch Entwicklung eines neuartigen Verfahrens zur Herstellung von Polyamidformkörpern oder Polyamidfolien aus Polyamidformmassen. Dabei handelt es sich um ein Verfahren zur Folienextrusion bzw. zur Extrusion von Halbzeugen, im Weiteren kurz als Folienextrusion bezeichnet, von Polyamiden, die im Wesentlichen aus aromatischen, aliphatischen oder cycloaliphatischen Dicarbonsäuren und cycloaliphatischen Diaminen hergestellt wurden. Alternativ kann es sich auch um Polyamide des AB-Typs, herstellber aus Aminocarbonsäuren handeln. Bevorzugt sind aber Polyamide des AA/BB-Typs aus Dicarbonsäuren und Diaminen herstellbar. Insbesondere kann es sich bei den Polyamiden um PA PACM12 oder um PA MACM12 handeln. Wie bereits ausgeführt, gibt es nach Stand der Technik kein über längere Zeit unter Einhaltung hoher Folienqualität durchführbares Folienextrusionsverfahren für derartige Polyamide.

Gelöst wurden die Aufgaben insbesondere durch Verwendung eines Polyamids mit einem Endgruppenanteil kleiner 170 mmol/kg, bevorzugt kleiner 100 mmol/kg im erfindungsgemäßen Verfahren.

Insbesondere wurden die Aufgaben gelöst durch ein Verfahren zur Folienextrusion das folgende Merkmale aufweist:
1.) Der Carboxyl- und/oder Aminoendgruppenanteil, bevorzugt der Aminoendgruppenanteil des Polyamids ist kleiner als 35 mmol/kg.
2.) Ein Bereich der Foliendüse, bevorzugt die Düsenlippe (2) der Foliendüse, bestehend aus einem Düsenkörper (1) und einer Düsenlippe (2), am Austrittsbereich des Extrusionswerkzeuges weist eine um 10 °C bis 100 °C höhere Temperatur auf als der Düsenkörper (1).

Durch Einsatz dieses Verfahrens ist es möglich, kontinuierlich, über einen langen Zeitraum Polyamidformkörper bzw. Polyamidfolien herzustellen, die eine hohe optische Qualität, insbesondere in Bezug auf Schlieren, Streifen, Gelkörper oder andere Verunreinigungen, zeigen. Durch die Wahl der erfindungsgemäß verwendeten Polyamide haben die Folien eine besonders gute Witterungs- und Chemikalienbeständigkeit, ganz besonders gegenüber Sonnencreme.

Ein entscheidender Aspekt der vorliegenden Erfindung ist der Düsenausgang, enthaltend eine Foliendüse (Fig. 1 bis 2). Diese Foliendüse setzt sich wiederum zusammen aus einem Düsenkörper (1) und einer Düsenlippe (2). Der Begriff Foliendüse wird im Zusammenhang dieses Patentes unabhängig von der Produktdicke synonym für alle Breitschlitzwerkzeuge, auch derer zur Produktion von Polymerplatten, verwendet.

Die Qualität der nach Stand der Technik hergestellten Polyamidformkörper bzw. Polyamidfolien lässt über einen relativ kurzen Produktionszeitraum nach, weil sich am Düsenausgang, genauer an der Düsenlippe (2) Feststoffe ablagern, die auf der Folie Schlieren oder Streifen hinterlassen. Überraschend wurde gefunden, dass durch eine Modifikation der Foliendüse, insbesondere der Düsenlippe (2), diese Feststoffablagerung, und damit die Schlieren- und Streifenbildung, unterbunden werden kann.

Erfindungsgemäß entscheidend ist, dass zumindest ein Bereich der Foliendüse, bevorzugt die Düsenlippe (2) eine um 10 °C bis 100 °C, bevorzugt um 20 °C bis 80 °C, besonders bevorzugt 30 °C bis 70 °C höhere Temperatur aufweist als der Düsenkörper (1). Insbesondere bevorzugt ist, dass die Temperatur der Düsenlippe (2) zwischen 10 °C und 100 °C bevorzugt um 20 °C bis 80 °C, besonders bevorzugt 30 °C bis 70 °C höher ist, als die Temperatur des Düsenkörpers (1), und dass der Düsenkörper (1) eine um maximal 5 °C höhere, bevorzugt die gleiche Temperatur aufweist wie der Extruder.

Genauer weist der Düsenkörper (1) in der Regel eine Temperatur zwischen 250 °C und 330 °C auf. Die Düsenlippe (2) hat gleichzeitig eine Temperatur zwischen 290 °C und 370 °C. Dazu weist die Düsenlippe (2) eine zusätzliche Temperierung (4) auf. Die Temperierung kann beispielsweise über eingesteckte Heizpatronen bzw. Flachheizkörper realisiert werden. Diese können u.a. elektrisch oder über ein temperiertes Medium wie beispielsweise Öl beheizt werden. Die Temperatur kann beispielsweise über Thermoelemente, Widerstandsthermometer oder berührungslose Temperaturmessverfahren wie IR-Thermometer bestimmt werden.

Die angegebenen Temperaturen werden an der Innenwand oder möglichst nah an der Innenwand des Extruderzylinders, an der Innenwand des Düsenkörpers oder möglichst nah an der Innenwand des Düsenkörpers und an der Innenwand der Düsenlippe oder möglichst nah an der Innenwand der Düsenlippe gemessen.

Im Bereich innerhalb des Extrusionswerkzeugs bzw. der Foliendüse vor dem Düsenausgang muss der Schmelzedruck hoch genug sein, um das noch im Polymeren gelöste volatile Bestandteile, wie Wasser oder gegebenenfalls Monomere vollständig in Lösung zu halten und das Entstehen von Gasblasen somit zu verhindern. Dies kann beispielsweise über die Geometrie des Extrusionswerkzeugs, den Gehalt der verwendeten Formmasse an Restfeuchtigkeit, den Volumenstrom an Schmelze und die Verarbeitungstemperaturen sichergestellt werden.

Insbesondere wird das erfindungsgemäße Verfahren in folgenden Prozessschritten durchgeführt:
- Die Formmasse wird bei einer Temperatur zwischen 250 °C und 330 °C in einem Extruder aufgeschmolzen.
- Die Formmasse tritt über eine Düsenlippe (2), die eine Temperatur zwischen 290 und 370 °C aufweist, aus dem Extruder aus.
- Die Formmasse wird in einer Dicke zwischen 10 µm und 10 mm über mindestens eine Walze oder mindestens ein Band abgezogen,
- Die Formmasse wird weitergefördert und dabei abgekühlt.

Als Extruder können alle zur Verarbeitung von Polyamiden geeigneten Ein-, Zwei- oder Multischneckenextruder verwendet werden. Diese Extruder können mit oder ohne, bevorzugt ohne, Entgasungsstellen ausgelegt sein. Die Extruder können im Bereich des Extruderzylinders mehrere Temperaturzonen oder eine einheitliche Temperatur haben.

Zusätzlich bevorzugt hat die Polyamidformmasse einen maximalen Wassergehalt von 0,1 Gew.%, bevorzugt von 0,02 Ges.%. Durch den geringen Wassergehalt wird die optische Qualität, insbesondere in Bezug auf eine zu verhindernde Blasenbildung und/oder Trübung verbessert.

Die erfindungsgemäßen Polyamide und damit die hergestellten Polyamidformkörper bzw. Polyamidfolien werden bevorzugt durch Polykondensation im Wesentlichen aus aromatischen, cycloaliphatischen oder aliphatischen Dicarbonsäuren, bevorzugt aus aromatischen oder aliphatischen Dicarconsäuren und cycloaliphatischen Diaminen hergestellt. Im Wesentlichen bedeutet, dass bis zu 40 Gew.%, bevorzugt zu maximal 10 Gew.%, besonders bevorzugt keine weiteren Komponenten wie Aminoundecansäure, monofunktionelle Bausteine oder weitere Dicarbonsäuren und/oder Diamine eingebaut sein können. Alternativ kann es sich auch um Polyamide des AB-Typs, herstellbar aus Aminocarbonsäuren handeln. Bevorzugt sind aber Polyamide des AA/BB-Typs aus Dicarbonsäuren und Diaminen herstellbar.

Bei den verwendeten cycloaliphatischen oder aliphatischen Dicarbonsäuren handelt es sich um cycloaliphatische, teilweise cyclischaliphatische, lineare oder verzweigte Dicarbonsäuren mit 4 bis 20, bevorzugt mit 8 bis 16 Kohlenstoffatomen. Besonders bevorzugt handelt es sich um eine Dicarbonsäure mit 12 Kohlenstoffatomen, ganz besonders bevorzugt um Dodecandisäure (Formel 1):

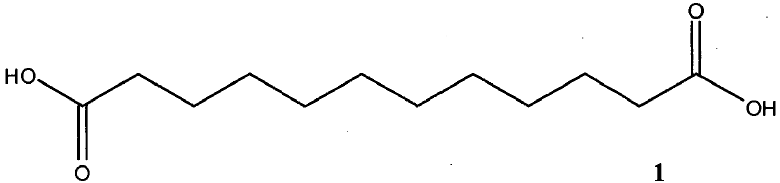

Bei den verwendeten aromatischen Dicarbonsäuren handelt es sich um Dicarbonsäuren mit einem oder mehreren aromatischen Ringen. Beispiele sind Phthalsäure, Isophthalsäure oder Terephthalsäure.

Bei den cycloaliphatischen Diaminen handelt es sich um aliphatische Diamine, die ein bis drei aliphatische Ringe aus 5 bis 8, bevorzugt 6 Kohlenstoffen aufweisen. Bevorzugt handelt es sich um Diaminodicyclohexylmethan (Formel 2) oder um 3,3-Dimethyl-p-diaminocyclohexylmethan (Formel 3):

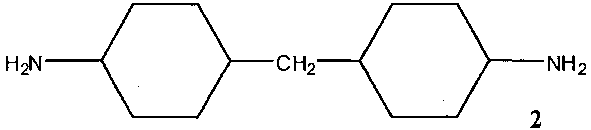

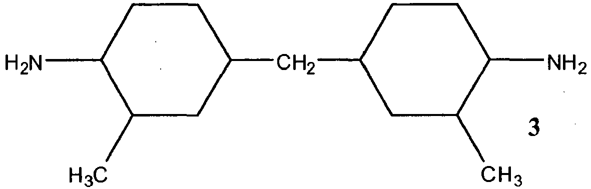

In einer besonderen Ausführungsform bevorzugt handelt es sich bei dem Polyamid zum erfindungsgemäßen Herstellen von Polyamidformkörpern oder Polyamidfolien um PA PACM12 oder um PA MACM12.

In einer anderen bevorzugten Ausführungsform handelt es sich um Polyamide auf Basis aromatischer Dicarbonsäuren.

Die erfindungsgemäß hergestellten Extrudate, z.B. Folien können im Allgemeinen eine Dicke zwischen 10 µm und 10 mm aufweisen. die bevorzugte Dicke des Produktes hängt jeweils von der Anwendung ab. Für Folienanwendungen sind Dicken zwischen 20 µm und 750 µm bevorzugt. Wenn die Folien besonders strapazierfähig sein sollen, sind besonders Dicken zwischen 125 µm und 750 µm bevorzugt. Für den Fall, dass eine besonders hohe Flexibilität, z.B. für Laminierungen oder Kaschierungen, nötig ist, sind Folien mit einer Dicke zwischen 20 µm und 250 µm besonders bevorzugt. Für optische Tiefeneffekte bei rückseitig bedruckten Folien sind Dicken von 125 bis 750µm bevorzugt.

Der Begriff Folie bzw. die Verfahrensbezeichnung Folienextrusion stellen keine Beschränkung bezüglich eines bestimmten Dickebereichs dar oder gehen mit einer Wickelbarkeit des erfindungsgemäß hergestellten Produktes einher. Vielmehr beschreiben diese Formulierungen ein Verfahren bzw. das Produkt aus diesem Verfahren bei dem es sich auch im Allgemeinen um extrudierte Halbzeuge handeln kann, die bevorzugt mit einem annähernd rechteckigen Querschnitt hergestellt werden.

Erfindungsgemäß hergestellte Polyamidfolien, bevorzugt flexible Polyamidfolien können u. a. zur Laminierung auf Formmassen, Holz, Glas oder Metallen, bevorzugt Formmassen verwendet werden.

Dazu können die Folien vor der Laminierung einem oder mehreren der folgenden Verarbeitungsschritte unterworfen werden: Rückseitiges Bedrucken, bevorzugt durch Siebdruck, Tiefdruck, Tampondruck, Digitaldruck; Vorderseitiges Bedrucken; Beschichten mit einer haftvermittelnden Schicht, wobei die Beschichtung auch durch Bedrucken erfolgen kann und wobei die Beschichtung auch auf zuvor gedruckte Schichten aufgebracht werden kann; Umformen nach Aufheizen der Folie; Zurechtschneiden. Die Verarbeitung der Folie ist nicht auf die genannten Verfahren beschränkt. Die Verarbeitungsverfahren können in anderer Reihenfolge als der genannten eingesetzt werden. Ebenso können Verarbeitungsschritte auch ein- oder mehrfach wiederholt werden.

Die Laminierung kann durch Verkleben auf der Oberfläche des Formkörpers erfolgen. Im Falle eines polymeren Materials, wie einer Formmasse, kann die Polyamidfolie mit dieser auch hinterspritzt werden. Alternativ können natürlich auch die Formmasse und die Polyamidfolie miteinander verklebt werden. Darüber hinaus aus ist auch die Heißlaminierung der Folie auf eine andere Folie oder auf eine Platte möglich. Die erfindungsgemäßen Folien können auch mit einer oder mehreren Trägerfolien laminiert werden. Das Folienlaminat wird dann, wie oben für Folien beschrieben, weiter verarbeitet. Bevorzugt wird die Folie vor dem Laminieren mit der Trägerfolie bedruckt, besonders bevorzugt im Tiefdruckverfahren.

Weiterhin können diese Folien als Dekorfolie, Schutzfolie, Verpackungsfolie oder zur Herstellung eines Folienlaminats Verwendung finden.

Es muss sich bei den Polyamidfolien jedoch nicht zwangsläufig um flexible Folien handeln, sondern es ist auch möglich, mit dem erfindungsgemäßen Verfahren Polyamidfolien mit einer Dicke zwischen 0,45 mm und 7,0 mm herzustellen. Bei diesen Materialien handelt es sich damit mehr um Polyamidformkörper, insbesondere um transparente Polyamidplatten.

Polyamidformkörper, genauer Polyamidplatten mit einer solchen Dicke können beispielsweise als transparente Abdeckung, Verkleidung, in Möbelstücken, im Fahrzeuginnenraum, in Telekommunikationsgeräten oder als Verglasung Verwendung finden. Darüber hinaus ist eine Anwendung im Bereich des Personenschutzes, z.B. als Schutz vor Projektilen, Splittern oder bei Explosionen möglich.

Die Polyamidformkörper oder Polyamidfolien können alternativ zu einer unbehandelten, transparenten und klaren Folie bzw. einem entsprechenden Formkörper auch während des Extrusionsprozesses modifiziert werden. So können die Folien oder Formkörper durch Zugabe von Farbmitteln wie Pigmenten und/oder Farbstoffen eingefärbt werden. Zusätzlich können durch Zugabe geeigneter Additive die Kratzfestigkeit, IR- bzw. UV-Absorption oder die Haptik verbessert bzw. beeinflusst werden. Durch Zugabe von Mikropartikeln kann auch die Lichtstreuung verändert werden. Kratzfestigkeit, Antischmutzverhalten, Antisoiling oder eine veränderte Haptik können auch durch entsprechende Beschichtungen bewirkt werden. Zusätzlich können die Folien oder Formkörper mit einer Dekorfolie hinter- oder überklebt werden, um optische Effekte wie einen Holzlook zu bewirken.

Im Weiteren kann der Ausdruck Polyamidformkörper auch synonym für Polyamidfolien stehen.

Zu den Zeichnungen: Die in Klammern stehenden Ziffern beziehen sich im Folgenden auf die Zeichnungen Fig. 1 und Fig. 2. In Fig. 1 ist eine Foliendüse nach Stand der Technik mit einem Lippenspalt (3) und ohne Lippentemperierung (4) abgebildet. In Fig. 2 ist eine erfindungsgemäß verwendete Foliendüse mit Temperierung (4) der Düsenlippe (2) dargestellt. Bei (1) handelt es sich um den Düsenkörper.

### Allgemeines Ausführungsbeispiel

Der Wassergehalt wurde nach Karl-Fischer bestimmt. Die Endgruppenbestimmungen erfolgen mittels Titration.

### Herstellung der Polyamidfolien bzw. -formkörper

Die Herstellung der Polyamidfolie erfolgt durch an sich bekannte Methoden, wie beispielsweise Extrusion durch eine Breitschlitzdüse wie bei der Flachfolienextrusion, der Blasfolienextrusion oder durch Lösungsgießen.

Der Kunststoffformkörper kann gegebenenfalls durch Verkleben Extrusionsbeschichtung oder Laminieren in Folgeprozessschritten auch mehrschichtig ausgeführt werden.

Die Beispiele wurden auf einer handelsüblichen Flachfolienanlage der Fa. Collin hergestellt. Hierbei wird das Polyamid bevorzugt in Granulatform, ohne dass die Zugabeform einen Einfluss auf die Ausführbarkeit der Erfindung hat, in einen Trichter aufgegeben, von dem es in den Extruder gefördert wird. Der Extruder besteht aus einem üblicherweise metallischen Zylinder, der von außen beheizt wird, und einer Extruderschnecke, die sich im Extruder um die eigene Achse dreht und somit das Polymere vom Einzugsbereich hinter der Trichteröffnung durch den Extruder fördert. In alternativen Ausführungsformen können auch Zwei- oder Multischneckenextruder verwendet werden. Durch die Erwärmung von außen und die Scherung des Polymeren im Extruder schmilzt das Polymere auf und gelangt hinter der Spitze der Extruderschnecke in das Extrusionswerkzeug in Form der Foliendüse (oder im Allgemeinen: Breitschlitzwerkzeug). Hier wird die Polyamidschmelze in eine flächige Form überführt und tritt durch den Düsenspalt flächig aus der Foliendüse aus. Die Foliendüse kann auch aus mehreren Extrudern mit Schmelze gespeist werden, so dass dadurch mehrschichtige Folien entstehen. Anschließend wird die Kunststoffbahn auf mindestens einer Walze abgekühlt und nachfolgend aufgewickelt.

Der für die Versuche verwendete Extruder mit geschlossenem Zylinder, zwei getrennt voneinander temperierbaren Extruderzonen und ohne Entgasungsöffnung weist einen Schneckendurchmesser von 35 mm bei einem L/D-Verhältnis (Länge der Schnecke/Durchmesser der Schnecke) von 25 auf. Verwendet wird eine handelsübliche Dreizonenschnecke. Für die Versuche wurden die folgenden Temperatureinstellungen an der Extrusionsanlage vorgenommen:

| | |
|---|---|
| Einzug (Zone hinter dem Trichter) | : 240°C |
| Extruderzone 1 | : 280°C |
| Extruderzone 2 | : 290°C |
| Übergangsbereich | : 290°C |
| Foliendüse | : 290°C |
| Lippentemperierung | : 350°C |

### (Ausnahme Vergleichsbeispiel V4 ohne Lippentemperierung: 290°C)

Die Folien werden im Versuchsaufbau einschichtig im sogenannten Chill-Roll-Verfahren hergestellt und haben eine Dicke von 50 µm. Anschließend werden die Folien visuell hinsichtlich ihrer Qualität bewertet. Dazu wird die Folien optisch im Vergleich zu einem Referenzmuster in marktfähiger Qualität hinsichtlich der optischen Güte verglichen und bewertet. Unter optischer Güte sind hier u.a. die Größen Streifen, Oberflächengüte, Gelkörperanzahl, Anzahl an Verunreinigungen und Anzahl an Partikeln aus abgebautem Material zu verstehen. Dabei erhielten alle Muster, die als marktfähig angesehen wurden, die Bewertung (+). Die Muster, die knapp nicht mehr marktfähig waren, erhielten die Bewertung (o) und die Muster, die deutllich bzw. sehr deutlich nicht marktfähig waren, erhielten die Bewertungen (-) bzw. (--).

Chill-Roll-Verfahren: Schmelzebahn wird auf eine Kühlwalze abgelegt, die andere Folienseite hat in diesem Moment keinen Walzenkontakt, d.h. es gibt keine Gegenwalze bzw. einen Glättspalt.

Bei Polyamid PA1 handelt es sich um Polyamide PA PACM 12 der Firma Evonik Degussa GmbH beispielsweise auf Basis der Zusammensetzung des TROGAMID^{®} CX7323. PA1 ist dabei ein niedrigviskoses PA PACM 12, welches nach Stand der Technik speziell für Spritzgussanwendungen einsetzbar ist. Polyamid PA2 ist ein mittelviskoses PA PACM 12.

| **Beispiel** | **Material-Beispiel bezeichnung** | **Folien-qualität** | **Wassergehalt nach KF** | **Aminoendgr. mmol/Kg** | **Carboxylengr. mmol/Kg** | **Endgr.- summe** |
|---|---|---|---|---|---|---|
| V1 | PA1 | **○** | <0,01 | **47** | 69 | 116 |
| V2 | PA1 | **-** | 0,05 | **61** | 69 | 130 |
| 1 | PA1 | **+** | <0,01 | **31** | 67 | 98 |
| V3 | PA2 | **--** | n.b. | **55** | 47 | 102 |
| 2 | PA2 | **+** | 0,014 | **20** | 68 | 88 |
| 3 | PA1 | **+** | 0,024 | **20** | 88 | 108 |
| 4 | PA1 | **+** | <0,02 | **16** | 75 | 91 |
| 5 | PA1 | **+** | 0,019 | **10** | 79 | 89 |
| 6 | PA1 | **+** | <0,02 | **11** | 73 | 84 |
| 7 | PA1 | **+** | 0,02 | **21** | 69 | 90 |
| 8 | PA2 | **+** | 0,009 | **26** | 64 | 90 |
| V4 | PA2 | **-** | 0,009 | **26** | 64 | 90 |

Die mit "V" bezeichneten Beispiele sind nicht erfindungsgemäße Vergleichsbeispiele. Bei diesen Polyamiden sind beide Endgruppen jeweils mit mehr als 35 mmol/kg im Polyamid enthalten. Die optische Beurteilung gibt wieder, dass diese Folien Blasen und/oder Streifen in einer relevanten Menge aufweisen ("-"). Das beste Ergebnis zeigte Vergleichsbeispiel V1, das keine Blasen und wenige Streifen aufwies.

Aus Beispiel 3 geht - vor allem im Vergleich zu Vergleichsbeispiel V3 - ergibt sich, dass nicht die Kettenlänge, sich ablesbar aus der Endgruppensumme, sondern der Anteil der einzelnen Endgruppenarten die Folienqualität bestimmt.

Bei Vergleichsbeispiel V4 wurde das gleiche Polyamid wie bei Beispiel 7 eingesetzt, wobei die Temperatur der Düsenlippe identisch zur Temperatur der gesamten Foliendüse und des Extruders eingestellt wurde. Bei diesem Beispiel sind nach 15 min Extrusionsdauer deutliche Ablagerungen an der Düsenlippe und entsprechend viele Streifen auf der Folie festzustellen.

## Patentansprüche

1. Verfahren zur Herstellung von Polyamidfolien oder Polyamidformkörpern aus einer Polyamidformmasse mittels Extrusion, **dadurch gekennzeichnet, dass** das Polyamid im Wesentlichen aus einer aromatischen, aliphatischen oder cycloaliphatischen Dicarbonsäure und einem cycloaliphatischen Diamin hergestellt wurde und einen Carboxyl- und/oder Aminoendgruppenanteil kleiner 35 mmol/kg aufweist, und dass ein Bereich der Foliendüse, bestehend aus einem Düsenkörper und einer Düsenlippe, am Austrittsbereich des Extrusionswerkzeuges eine um 10 °C bis 100 °C höhere Temperatur aufweist als der Düsenkörper.

2. Verfahren gemäß Anspruch 1, **dadurch gekennzeichnet, dass** das Polyamid im Wesentlichen aus einer aliphatischen oder cycloaliphatischen Dicarbonsäure und einem cycloaliphatischen Diamin hergestellt wurde und einen Carboxyl- und/oder Aminoendgruppenanteil kleiner 35 mmol/kg aufweist.

3. Verfahren gemäß Anspruch 1, **dadurch gekennzeichnet, dass** das Polyamid im Wesentlichen aus einer aromatischen Dicarbonsäure und einem cycloaliphatischen Diamin hergestellt wurde und einen Carboxyl- und/oder Aminoendgruppenanteil kleiner 35 mmol/kg aufweist.

4. Verfahren gemäß Anspruch 2, **dadurch gekennzeichnet, dass** das Polyamid aus einer aliphatischen oder cycloaliphatischen Dicarbonsäure und einem cycloaliphatischen Diamin hergestellt wurde und einen Aminoendgruppenanteil kleiner 35 mmol/kg aufweist.

5. Verfahren gemäß Anspruch 3, **dadurch gekennzeichnet, dass** das Polyamid aus einer aromatischen Dicarbonsäure und einem cycloaliphatischen Diamin hergestellt wurde und einen Aminoendgruppenanteil kleiner 35 mmol/kg aufweist.

6. Verfahren, gemäß mindestens einem der Ansprüche 1 bis 5 **dadurch gekennzeichnet, dass** der Druck am Düsenausgang des Extruders so hoch ist, dass alle volatilen Bestandteile in der Schmelze vollständig gelöst sind.

7. Verfahren gemäß mindestens einem der Ansprüche 1 bis 6, **dadurch gekennzeichnet, dass** es sich bei dem Bereich der Foliendüse mit einer um 10 °C bis 100 °C höheren Temperatur um die Düsenlippe handelt, und dass die Temperatur der Düsenlippe zwischen 10 °C und 100 °C höher ist, als die Temperatur des Düsenkörpers.

8. Verfahren gemäß mindestens einem der Ansprüche 1 bis 7, **dadurch gekennzeichnet, dass** der Düsenkörper eine Temperatur zwischen 250 °C und 330 °C aufweist, und dass die Düsenlippe eine Temperatur zwischen 290 °C und 370 °C aufweist.

9. Verfahren gemäß mindestens einem der Ansprüche 1 bis 8, **dadurch gekennzeichnet, dass** die Polyamidformmasse einen maximalen Wassergehalt von 0,1 Gew% aufweist.

10. Verfahren, gemäß mindestens einem der Ansprüche 1 bis 9, **dadurch gekennzeichnet, dass** das Verfahren folgende Prozessschritte umfasst:
- eine Formmasse wird bei einer Temperatur zwischen 250 und 330 °C in einem Extruder aufgeschmolzen,
- die Formmasse tritt über eine Düsenlippe, die eine Temperatur zwischen 290 und 370 °C aufweist, aus dem Extruder aus,
- die Formmasse wird in einer Dicke zwischen 10 µm und 10 mm über mindestens eine Walze oder mindestens ein Band abgezogen,
- die Formmasse wird weitergefördert und dabei abgekühlt.

11. Polyamidformkörper, gemäß mindestens einem der Ansprüche 1 bis 10 herstellbar, **dadurch gekennzeichnet, dass** das Polyamid aus aromatischen, aliphatischen oder cycloaliphatischen Dicarbonsäuren und einem cycloaliphatischen Diamin hergestellt wurde, einen Aminoendgruppenanteil kleiner 35 mmol/kg, eine Dicke zwischen 10 µm und 10 mm aufweist und mittels Extrusion hergestellt wurde.

12. Polyamidformkörper, gemäß Anspruch 11, **dadurch gekennzeichnet, dass** das Polyamid aus aromatischen Dicarbonsäuren und einem cycloaliphatischen Diamin hergestellt wurde.

13. Polyamidformkörper, gemäß Anspruch 11, **dadurch gekennzeichnet, dass** das Polyamid aus aliphatischen oder cycloaliphatischen Dicarbonsäuren und einem cycloaliphatischen Diamin hergestellt wurde.

14. Polyamidformkörper gemäß Anspruch 13, **dadurch gekennzeichnet, dass** es sich bei dem Polyamid um Polyamid PACM12 oder um Polyamid MACM12 handelt, und dass der Polyamidformkörper durch ein Verfahren gemäß mindestens einem der Ansprüche 1 bis 4 hergestellt wurde.

15. Polyamidformkörper gemäß mindestens einem der Ansprüche 11 bis 14, **dadurch gekennzeichnet, dass** das Polyamid einen Endgruppenanteil kleiner 170 mmol/kg, aufweist.

16. Polyamidformkörper gemäß mindestens einem der Ansprüche 11 bis 15, **dadurch gekennzeichnet, dass** die Folie eine Dicke zwischen 0,45 mm und 7,0 mm aufweist.

17. Verwendung eines Polyamidformkörpers gemäß mindestens einem der Ansprüche 11 bis 16 zur Laminierung auf Formmassen.

18. Verwendung eines Polyamidformkörpers gemäß Anspruch 17, **dadurch gekennzeichnet, dass** der Polyamidformkörper mit der Formmasse Hinterspritzt wird, oder die Formmasse und der Polyamidformkörper miteinander verklebt werden.

19. Verwendung eines Polyamidformkörpers gemäß mindestens einem der Ansprüche 11 bis 16 als Dekorfolie, Schutzfolie, Verpackungsfolie oder zur Herstellung eines Folienlaminats.

20. Verwendung eines Polyamidformkörpers gemäß mindestens einem der Ansprüche 11 bis 16 als transparente Abdeckung, Verkleidung, in Möbelstücken, im Fahrzeuginnenraum, in Telekommunikationsgeräten oder als Verglasung.

## Claims

1. Process for producing polyamide films or polyamide mouldings from a polyamide moulding composition by means of extrusion, **characterized in that** the polyamide has been prepared substantially from an aromatic, aliphatic or cycloaliphatic dicarboxylic acid and a cycloaliphatic diamine and has a carboxyl and/or amino endgroup fraction of less than 35 mmol/kg, and **in that** a region of the film die, consisting of a die body and a die lip, has a temperature at the exit region of the extrusion die which is higher by 10°C to 100°C than that of the die body.

2. Process according to Claim 1, **characterized in that** the polyamide has been prepared substantially from an aliphatic or cycloaliphatic dicarboxylic acid and a cycloaliphatic diamine and has a carboxyl and/or amino endgroup fraction of less than 35 mmol/kg.

3. Process according to Claim 1, **characterized in that** the polyamide has been prepared substantially from an aromatic dicarboxylic acid and a cycloaliphatic diamine and has a carboxyl and/or amino endgroup fraction of less than 35 mmol/kg.

4. Process according to Claim 2, **characterized in that** the polyamide has been prepared from an aliphatic or cycloaliphatic dicarboxylic acid and a cycloaliphatic diamine and has an amino endgroup fraction of less than 35 mmol/kg.

5. Process according to Claim 3, **characterized in that** the polyamide has been prepared from an aromatic dicarboxylic acid and a cycloaliphatic diamine and has an amino endgroup fraction of less than 35 mmol/kg.

6. Process according to at least one of Claims 1 to 5, **characterized in that** the pressure at the die outlet of the extruder is such that all of the volatile constituents in the melt are fully dissolved.

7. Process according to at least one of Claims 1 to 6, **characterized in that** the region of the film die having a temperature higher by 10°C to 100°C is the die lip, and **in that** the temperature of the die lip is between 10°C and 100°C higher than the temperature of the die body.

8. Process according to at least one of Claims 1 to 7, **characterized in that** the die body has a temperature of between 250°C and 330°C, and **in that** the die lip has a temperature of between 290°C and 370°C.

9. Process according to at least one of Claims 1 to 8, **characterized in that** the polyamide moulding composition has a maximum water content of 0.1% by weight.

10. Process according to at least one of Claims 1 to 9, **characterized in that** the process comprises the following operating steps:
- a moulding composition is melted at a temperature of between 250 and 330°C in an extruder,
- the moulding compound exits the extruder via a die lip which has a temperature of between 290 and 370°C,
- the moulding composition is taken off in a thickness between 10 µm and 10 mm via at least one roll or at least one belt,
- the moulding composition is conveyed further and in the process is cooled.

11. Polyamide moulding producible according to at least one of Claims 1 to 10, **characterized in that** the polyamide has been prepared from aromatic, aliphatic or cycloaliphatic dicarboxylic acids and a cycloaliphatic diamine, has an amino endgroup content of less than 35 mmol/kg, has a thickness of between 10 µm and 10 mm and has been produced by means of extrusion.

12. Polyamide moulding according to Claim 11, **characterized in that** the polyamide has been prepared from aromatic dicarboxylic acids and a cycloaliphatic diamine.

13. Polyamide moulding according to Claim 11, **characterized in that** the polyamide has been prepared from aliphatic or cycloaliphatic dicarboxylic acids and a cycloaliphatic diamine.

14. Polyamide moulding according to Claim 13, **characterized in that** the polyamide is polyamide PACM12 or polyamide MACM12, and **in that** the polyamide moulding has been produced by a process according to at least one of Claims 1 to 4.

15. Polyamide moulding according to at least one of Claims 11 to 14, **characterized in that** the polyamide has an endgroup fraction of less than 170 mmol/kg.

16. Polyamide moulding according to at least one of Claims 11 to 15, **characterized in that** the film has a thickness of between 0.45 mm and 7.0 mm.

17. Use of a polyamide moulding according to at least one of Claims 11 to 16 for laminating on moulding compositions.

18. Use of a polyamide moulding according to Claim 17, **characterized in that** the polyamide moulding is backed with the moulding composition by in-mould injection coating, or the moulding composition and the polyamide moulding are bonded adhesively to one another.

19. Use of a polyamide moulding according to at least one of Claims 11 to 16 as a decorative film, protective film or packaging film or for producing a film laminate.

20. Use of a polyamide moulding according to at least one of Claims 11 to 16 as a transparent liner, cover, in pieces of furniture, in a vehicle interior, in telecommunications devices or as glazing.

## Revendications

1. Procédé pour la production de films à base de polyamide ou de corps moulés à base de polyamide par extrusion à partir d'une matière à mouler à base de polyamide, **caractérisé en ce que** le polyamide a été produit essentiellement à partir d'un acide dicarboxylique aromatique, aliphatique ou cycloaliphatique et d'une diamine cycloaliphatique et présente une teneur en groupes terminaux carboxy et/ou amino inférieure à 35 mmoles/kg, et **en ce qu'**une zone de la filière plate, consistant en un corps de filière et une lèvre de filière, présente au niveau de la zone de sortie de l'outil d'extrusion une température supérieure de 10 °C à 100 °C à celle du corps de la filière.

2. Procédé selon la revendication 1, **caractérisé en ce que** le polyamide a été produit essentiellement à partir d'un acide dicarboxylique aliphatique ou cycloaliphatique et d'une diamine cycloaliphatique et présente une teneur en groupes terminaux carboxy et/ou amino inférieure à 35 mmoles/kg.

3. Procédé selon la revendication 1, **caractérisé en ce que** le polyamide a été produit essentiellement à partir d'un acide dicarboxylique aromatique et d'une diamine cycloaliphatique et présente une teneur en groupes terminaux carboxy et/ou amino inférieure à 35 mmoles/kg.

4. Procédé selon la revendication 2, **caractérisé en ce que** le polyamide a été produit à partir d'un acide dicarboxylique aliphatique ou cycloaliphatique et d'une diamine cycloaliphatique et présente une teneur en groupes terminaux amino inférieure à 35 mmoles/kg.

5. Procédé selon la revendication 3, **caractérisé en ce que** le polyamide a été produit à partir d'un acide dicarboxylique aromatique et d'une diamine cycloaliphatique et présente une teneur en groupes terminaux amino inférieure à 35 mmoles/kg.

6. Procédé selon au moins l'une quelconque des revendications 1 à 5, **caractérisé en ce que** la pression à la sortie de la filière de l'extrudeuse est suffisamment élevée pour que tous les composants volatils soient totalement dissous dans la masse fondue.

7. Procédé selon au moins l'une quelconque des revendications 1 à 6, **caractérisé en ce que** pour ce qui est de la zone de la filière plate ayant une température supérieure de 10 °C à 100 °C il s'agit de la lèvre de la filière, et **en ce que** la température de la lèvre de la filière est supérieure d'entre 10 °C et 100 °C à la température du corps de la filière.

8. Procédé selon au moins l'une quelconque des revendications 1 à 7, **caractérisé en ce que** le corps de la filière présente une température comprise entre 250 °C et 330 °C, et **en ce que** la lèvre de la filière présente une température comprise entre 290 °C et 370 °C.

9. Procédé selon au moins l'une quelconque des revendications 1 à 8, **caractérisé en ce que** la matière à mouler à base de polyamide présente une teneur maximale en eau de 0,1 % en poids.

10. Procédé selon au moins l'une quelconque des revendications 1 à 9, **caractérisé en ce que** le procédé comprend les étapes de processus suivantes :
- on fait fondre une matière à mouler à une température comprise entre 250 et 330 °C dans une extrudeuse,
- la matière à mouler sort de l'extrudeuse par une lèvre de filière qui présente une température comprise entre 290 et 370 °C,
- la matière à mouler est tirée en une épaisseur comprise entre 10 µm et 10 mm sur au moins un cylindre ou au moins une bande,
- la matière à mouler est transportée et en même temps refroidie.

11. Corps moulé à base de polyamide, pouvant être produit selon au moins l'une quelconque des revendications 1 à 10, **caractérisé en ce que** le polyamide a été produit à partir d'acides dicarboxyliques aromatiques, aliphatiques ou cycloaliphatiques et d'une diamine cycloaliphatique, présente une teneur en groupes terminaux amino inférieure à 35 mmoles/kg, une épaisseur comprise entre 10 µm et 10 mm et a été produit par extrusion.

12. Corps moulé à base de polyamide, selon la revendication 11, **caractérisé en ce que** le polyamide a été produit à partir d'acides dicarboxyliques aromatiques et d'une diamine cycloaliphatique.

13. Corps moulé à base de polyamide, selon la revendication 11, **caractérisé en ce que** le polyamide a été produit à partir d'acides dicarboxyliques aliphatiques ou cycloaliphatiques et d'une diamine cycloaliphatique.

14. Corps moulé à base de polyamide, selon la revendication 13, **caractérisé en ce que** le polyamide consiste en polyamide PACM12 ou en polyamide MACM12, et **en ce que** le corps moulé à base de polyamide a été produit par un procédé selon au moins l'une quelconque des revendications 1 à 4.

15. Corps moulé à base de polyamide, selon au moins l'une quelconque des revendications 11 à 14, **caractérisé en ce que** le polyamide présente une teneur en groupes terminaux inférieure à 170 mmoles/kg.

16. Corps moulé à base de polyamide, selon au moins l'une quelconque des revendications 11 à 15, **caractérisé en ce que** le film présente une épaisseur comprise entre 0,45 mm et 7,0 mm.

17. Utilisation d'un corps moulé à base de polyamide selon au moins l'une quelconque des revendications 11 à 16, pour la stratification sur des matières à mouler.

18. Utilisation d'un corps moulé à base de polyamide selon la revendication 17, **caractérisé en ce qu'**on applique la matière à mouler par rétroprojection sur le corps moulé à base de polyamide ou on colle l'un avec l'autre le corps moulé à base de polyamide et la matière à mouler.

19. Utilisation d'un corps moulé à base de polyamide selon au moins l'une quelconque des revendications 11 à 16, en tant que film décoratif, film protecteur, film d'emballage ou pour la production d'un stratifié pelliculaire.

20. Utilisation d'un corps moulé à base de polyamide selon au moins l'une quelconque des revendications 11 à 16, en tant que couvercle transparent, habillage, dans des meubles, dans l'habitacle de véhicules, dans des appareils de télécommunication ou en tant que vitrage.
